# EUROPEAN PATENT APPLICATION

(11) **EP 3 760 502 A1**
(43) Date of publication of application: **06.01.2021**
(21) Application number: 18908210.0
(22) Date of filing: 12.06.2018
(51) Int. Cl.: B60S 5/06

(54) **BATTERY STORAGE FRAME AND NEW ENERGY AUTOMOBILE BATTERY SWAPPING STATION**

(30) Priority: 28.02.2018 CN 201810166498
(71) Applicant: NIO (ANHUI) HOLDING CO., LTD, Economic and Technological Development Zone Hefei Anhui 230601 (CN)
(72) Inventor: QI, Wengang, Jiading Shanghai (CN); HAO, Zhanduo, Jiading Shanghai (CN); YANG, Chao, Jiading Shanghai (CN); CHEN, Jiong, Jiading Shanghai (CN)
(74) Representative: Vossius & Partner Patentanwälte Rechtsanwälte mbB
(86) International application number: PCT/CN2018/090742
(87) International publication number: WO 2019/165721

(57) **Abstract**

Disclosed are a battery storage rack and a battery swap station for a new energy vehicle. The battery storage rack (100) comprises: a frame structure (110); more than one storage space (120) for storing a battery (200), the storage spaces (120) being located in the frame structure (110) in a stacked manner; a battery conveying apparatus (130), wherein at least one of the storage spaces (120) is provided with the battery conveying apparatus (130), and the battery conveying apparatus (130) is adapted to transfer a battery (200) docked in a corresponding storage space (120) to a desired storage position. In this way, the construction area of the battery swap station can be reduced, and fast and reliable battery swap can be achieved.

## Description

### Technical Field

The invention relates to the technical field of battery charging and swapping for new energy vehicles. Specifically, the invention relates to a battery storage rack, and further relates to a battery swap station for a new energy vehicle.

### Background Art

Battery swap is one of fast energy replenishment methods for new energy vehicles. Battery swap technology and systems for new energy vehicles provide one of fast energy replenishment solutions for new energy vehicles.

At present, technical research and industrial development of battery charging and swapping facilities for new energy vehicles are very rapid, and construction of battery swap stations is accelerating. In the battery swap stations for new energy vehicles, a traction battery of a new energy vehicle is removed by a battery swap device or tool, and is immediately swapped for another traction battery.

The battery swap stations for new energy vehicles can quickly swap batteries for the new energy vehicles and relieve users' anxiety about available range. However, there are problems such as larger construction area, higher system cost, and complicated battery swap technology. Moreover, how to quickly and reliably swap batteries is difficulty and key core technology for wide use of battery swap technology and commercial operation for large-scale battery swap.

### Summary of the Invention

An object of one aspect of the invention is to provide an improved battery storage rack.

Further, an object of another aspect of the invention is to provide an improved battery swap station for a new energy vehicle.

To achieve the foregoing object, a first aspect of the invention provides a battery storage rack, wherein the battery storage rack comprises:
a frame structure;
more than one storage space for storing a battery, the storage spaces being located in the frame structure in a stacked manner;
a battery conveying apparatus, wherein at least one of the storage spaces is provided with the battery conveying apparatus, and the battery conveying apparatus is adapted to transfer a battery docked in a corresponding storage space to a desired storage position.

Optionally, in the battery storage rack described above, the number of the storage spaces is expandable.

Optionally, in the battery storage rack described above, the battery conveying apparatus comprises a conveyor belt, a conveyor chain or a conveyor roller.

Optionally, in the battery storage rack described above, damping portions arranged in the direction of transfer are formed on a surface of the battery conveying apparatus that is adapted to be in contact with the battery.

Optionally, in the battery storage rack described above, a battery positioning apparatus is provided in the at least one storage space.

Optionally, in the battery storage rack described above, the battery positioning apparatus is a positioning pin, a positioning rail or a positioning block.

Optionally, in the battery storage rack described above, a battery cooling apparatus is arranged below the battery storage rack.

Optionally, in the battery storage rack described above, a pluggable apparatus is provided at the at least one storage space, the pluggable apparatus comprising an electrical connector and/or a water connector.

Optionally, in the battery storage rack described above, the battery storage rack has adjustable anchor supports.

To achieve the foregoing object, a second aspect of the invention provides a battery swap station for a new energy vehicle, wherein any one of the battery storage racks as described in the foregoing first aspect is provided in the battery swap station for a new energy vehicle.

### Brief Description of the Drawings

The disclosure of the invention will be more apparent with reference to the accompanying drawings. It should be appreciated that these accompanying drawings are merely used for the purpose of description, and are not intended to limit the scope of protection of the invention. In the figures:
Fig. 1 is a schematic front view of a battery storage rack according to one embodiment of the invention;
Fig. 2 is a schematic front view of a battery storage space in the battery storage rack of Fig. 1;
Fig. 3 is a schematic perspective view of a battery conveying apparatus in the battery storage rack of Fig. 1;
Fig. 4 is a schematic perspective view of a conveyor belt of the battery conveying apparatus of Fig. 3; and
Fig. 5 is a schematic view of anchors applied to a battery storage rack according to one embodiment of the invention.

### Detailed Description of Embodiments

Specific embodiments of the invention are described below in detail with reference to the accompanying drawings. In the accompanying drawings, the same reference numerals denote the same or corresponding technical features.

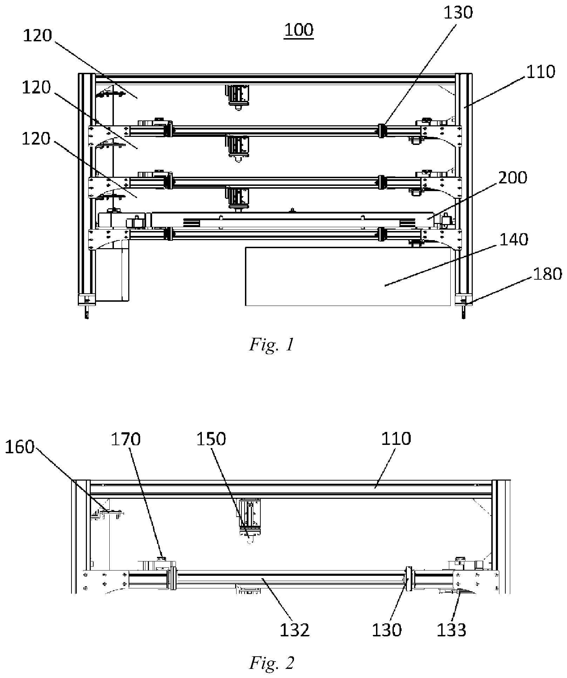

Fig. 1 is a schematic front view of a battery storage rack according to one embodiment of the invention.

As shown in the figure, the battery storage rack 100 may have a frame structure 110.A storage space 120 with a battery conveying apparatus 130 is provided inside the frame structure 110. The frame structure may use an aluminium profile or a steel structure, which has a simple structure and low costs and is easy to machine.

The battery storage rack of the embodiment in Fig. 1 has multiple functions. Thanks to the provision of the storage space 120 and the battery conveying apparatus 130 at the storage space, the battery storage rack can store a battery in a battery swap station and transfer or adjust the position of the battery in the storage space.

The frame structure 110 of the battery storage rack 100 may be internally provided with more than one storage space 120 for storing a battery 200. The figure only exemplarily shows the battery 200 in a storage state in one of the storage spaces. These storage spaces 120 may be located in the battery storage rack in a stacked manner, and in optional embodiments, may be at different levels. The space is compact in this embodiment, and due to the basic characteristics of the battery, flat laying of the batteries will greatly reduce the utilization of the ground, therefore, a stacking method is used to not only ensure a battery transportation space, but also effectively leave a space for the action of a pluggable apparatus for the battery.

The battery storage rack 100 may also comprise a battery conveying apparatus 130. As shown in the figure, in this embodiment, a battery conveying apparatus may be provided in each storage space, and the battery conveying apparatus is adapted to transfer or adjust a battery docked in the corresponding storage space to a desired storage position. In an optional embodiment, a battery conveying apparatus may also be provided only in at least one of the storage spaces, so as to transfer or adjust the position of the battery in the corresponding storage space to meet the positional requirements for battery storage, charging, etc. After the transfer or the positional adjustment of the battery is completed, the battery can be fixed in place at the storage position in the storage space for storage and/or charging, cooling, etc.

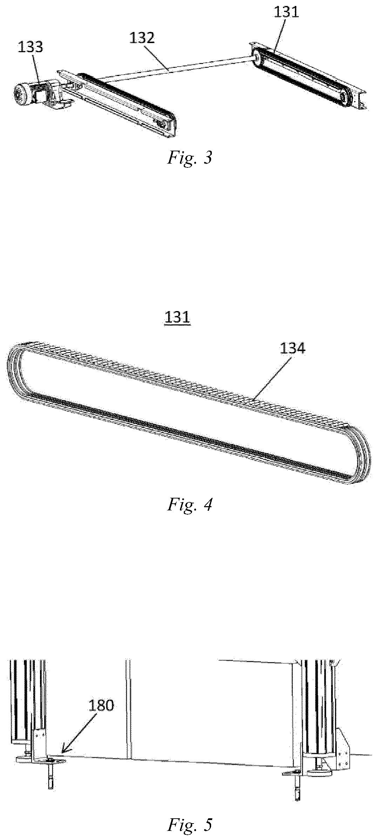

In order to ensure stable transportation and compact structure, the battery conveying apparatus may be implemented by a motor driving a conveyor belt, a conveyor chain or a roller. Referring to Fig. 3, in an optional embodiment, two conveyor chains or conveyor belts 131 may be chosen. When using conveyor chains or rollers, an appropriate arrangement direction and spacing can also be set as required.

The number of storage spaces 120 for storing batteries can be expanded, for example, but not limited to, can be expanded in directions such as a vertical direction, and a lateral direction. The smallest expandable unit in the battery storage rack is one battery storage space. The number of storage spaces expanded in the vertical direction on the battery storage rack is mainly determined by an overall height of the battery swap station, a height of the battery storage rack, and a travel distance of another battery docking apparatus. In the illustrated embodiment, three storage spaces are optionally provided. In the case of expansion, an additional storage space may be stacked above the battery storage rack.

The battery storage rack itself may also be expanded. Through a compact and expandable design, the battery storage rack can be expanded or combined to meet the requirements of different application scenarios. Regarding the expandability of the battery storage rack, it can not only be stacked in the height direction but also expand in a horizontal lateral direction. For example, battery storage racks may be provided on two sides of another battery docking apparatus (such as an elevator), or may be configured on one side thereof. By expanding the battery storage rack in the horizontal direction, it is possible to increase an overall battery swap capacity and an overall electrical energy storage capacity of the battery swap station for the new energy vehicle; and the increase in the number of battery storage racks can better serve the battery swap station.

In practice, the above-mentioned expandability of the battery storage rack is very important for the battery swap station for the new energy vehicle, because the battery storage and transportation device is limited in terms of space and resource, such that whether the device can be flexibly configured becomes critical. The battery storage rack described here can well meet the requirements of expanding in a three-dimensional space, for example, by vertically stacking one battery storage space (the smallest unit), or by modifying the position where a cooling apparatus 140 (see Fig. 1) is located to a storage space to realize the expansion of the storage space in a single battery storage rack; the battery storage racks can be horizontally expanded by placing same in a front-rear or left-right direction; and the battery storage racks are placed in the horizontal direction in a mirror manner with respect to an elevator having transverse movement, lateral movement, and lifting functions placed in the middle, to achieve expansion in the corresponding directions.

As shown in the figure, a battery cooling apparatus 140 may be arranged below the battery storage rack 100. The battery cooling apparatus may be provided as a water cooling system, which can be selected to be arranged below the storage space to achieve heat exchange when the battery is subjected to fast charging. The water cooling system here may be optional. If water cooling is not provided, the space for the battery cooling apparatus can also be provided as the battery storage space, thereby adding a level of battery storage space.

Fig. 2 is a schematic front view of a battery storage space in the battery storage rack of Fig. 1. As the smallest expandable unit in the battery storage rack, the battery storage space may comprise the frame structure 110, the battery conveying apparatus 130, and a battery positioning apparatus 150. The battery storage space may also comprise a pluggable apparatus 160. The battery positioning apparatus 150 may be provided in the storage space of the battery storage rack 100 to achieve the positioning of the battery in the storage space. For example, in the illustrated embodiment, the battery positioning apparatus may be in the form of a positioning pin that cooperates with a positioning hole in the battery. In other optional embodiments, a positioning rail, a positioning block, etc. may also be used as the battery positioning apparatus. For ease of operation, the battery positioning apparatus may have a chamfer to facilitate guiding the docking of the battery.

The positioning hole may be provided in the battery in advance. At the position where the battery is installed in the storage space, the aforementioned positioning pin may be placed directly above the corresponding positioning hole in the battery, so the positioning hole in the battery can be used in combination to position the battery for charging, so that the battery can be transported, positioned, plugged for charging between the storage racks. After the battery has been limited in the transfer process, an actuation mechanism can push the positioning pin into the positioning hole to complete further positioning, thereby realizing fixing of the battery and preventing the battery from falling.

In an embodiment in which a positioning rail, or a positioning block, etc. is used, the battery may be also provided with a corresponding cooperating structure, such as but not limited to a positioning groove.

The above battery positioning apparatus facilitates plugging of a pluggable apparatus such as an electrical connector/a water connector on the battery, so as to facilitate effective realization of charging and water cooling cycles. By plugging the electrical connector and the water connector of the battery, it is possible to achieve charging for energy replenishment and cooling during battery charging.

An electronic component such as a sensor 170 is also shown in Figs. 1 and 2. In an optional embodiment, the sensor 170 may be used to sense whether the battery is in place. The battery storage rack may use a single-sided cantilever structure, and the position where the electronic component such as the sensor is arranged facilitates device operation, maintenance and overhaul.

Fig. 3 is a schematic perspective view of a battery conveying apparatus in the battery storage rack of Fig. 1. Fig. 4 is a schematic perspective view of a conveyor belt of the battery conveying apparatus in Fig. 3.

In the illustrated example, the battery conveying apparatus is a conveyor belt. It can be understood that, in other optional embodiments, the battery conveying apparatus may also be selected as a conveyor belt, a conveyor chain, or a conveyor roller, etc., which is driven by a motor, such that the battery can be delivered to realize battery transfer, storage and support.

In the example shown in Fig. 3, the battery conveying apparatus comprises synchronized conveyor belts 131, and the synchronization therebetween is achieved by means of a transmission shaft 132, and the two conveyor belts are positioned near two ends of the transmission shaft, respectively. The conveyor belts 131 may be driven by the motor 133.

In the example shown in Fig. 4, a conveying surface of the conveyor belt 131 that is adapted to be in contact with the battery is designed with damping portions 134 arranged in the conveying direction. An example of the damping portion is tooth-shaped. In an optional embodiment, other uneven pattern shapes may also be used. With a similar design, a contact area between the battery and the conveyor belt when adjusting the direction during positioning can be reduced, that is, a friction force, a surface friction force between the battery and the conveyor belt in the battery delivery direction can be increased to improve the efficiency of battery transportation in the storage space, prevent slippage, and ensure the reliability of positioning the battery on the battery storage rack. Similar damping portions may also be provided in the case of the conveyor chain or the roller.

As shown in Figs. 3 and 4, the motor 133 can drive the conveyor belt to transfer the battery from the elevator or another docking apparatus into the storage space of the battery rack for charging and energy replenishment, and can realize position transfer or adjustment of the battery in the storage space.

Fig. 5 is a schematic view of anchors applied to a battery storage rack according to one embodiment of the invention.

The anchors, that is, anchor supports 180 may be adjustable. As such, in the invention, the battery storage rack in this aspect is designed with the transportability being taken into account, and a separation surface is designed by means of a rational structure, so that the battery storage racks are easy to assemble, and are easy to transport one by one or as a whole. The use of the adjustable anchor supports can compensate for problems such as tilt foundation in various sites upon site selection for the battery swap station, and eliminate the construction of basic foundation in the sites. As shown in Fig. 5, according to the design of the anchor supports, it can be fixed either by anchor bolts or by connecting plates, such that there is no problem such as tilt and deflection for the battery storage rack as a whole.

Another aspect of the invention provides a battery swap station for a new energy vehicle that is provided with a battery storage rack as described in any one of the above optional embodiments or examples. It can be learned that the corresponding battery swap station for the new energy vehicle will have at least the advantages corresponding to the aforementioned battery storage rack, such as but not limited to being compact, expandable, free of basic construction, having good maintainability, etc., and using as few mechanisms as possible to implement motion units, and reasonably allocation and control of manufacturing tolerances of parts and components can effectively control the cost.

The battery storage rack and the battery swap station for the new energy vehicle of this application at least solve the problems that, after the battery is reliably and quickly swapped from the vehicle, the battery is quickly transported to the battery storage rack and is charged and replenished with energy, and a fresh battery is transported to the corresponding position for quick installation of the battery and quick battery swap.

The battery storage rack is a tool and place for charging, transporting and storing the traction battery of the new energy vehicle, which stores and transports the swapped battery to meet the requirements of safety, compactness, expandability, fast speed, etc. In addition to being used in the battery swap station for the new energy vehicle, the battery storage rack can also be quickly modified into a battery rack for energy storage to meet the following requirements: (1) having multiple functions, being stable and reliable to operate, and having a compact structure; (2) being easy to transport, having low costs, and being free of basic construction or the construction of the foundation in site; and (3) expandability, which, through a design idea of modular small units, can fully utilize the resource and optimize the configuration such that the device is well integrated and the device has a compact space.

The technical scope of the invention is not merely limited to the above description. Those skilled in the art can make various changes and modifications to the above embodiments without departing from the technical idea of the invention, and these changes and modifications shall fall within the scope of the invention.

## Claims

1. A battery storage rack, **characterized by** comprising:
a frame structure;
more than one storage space for storing a battery, the storage spaces being located in the frame structure in a stacked manner;
a battery conveying apparatus, wherein at least one of the storage spaces is provided with the battery conveying apparatus, and the battery conveying apparatus is adapted to transfer a battery docked in a corresponding storage space to a desired storage position.

2. The battery storage rack according to claim 1, **characterized in that** the number of the storage spaces is expandable.

3. The battery storage rack according to claim 1 or 2, **characterized in that** the battery conveying apparatus comprises a conveyor belt, a conveyor chain or a conveyor roller.

4. The battery storage rack according to claim 3, **characterized in that** damping portions arranged in the direction of transfer are formed on a surface of the battery conveying apparatus that is adapted to be in contact with the battery.

5. The battery storage rack according to claim 1 or 2, **characterized in that** a battery positioning apparatus is provided in the at least one storage space.

6. The battery storage rack according to claim 5, **characterized in that** the battery positioning apparatus is a positioning pin, a positioning rail or a positioning block.

7. The battery storage rack according to claim 1 or 2, **characterized in that** a battery cooling apparatus is arranged below the battery storage rack.

8. The battery storage rack according to claim 1 or 2, **characterized in that** a pluggable apparatus is provided at the at least one storage space, the pluggable apparatus comprising an electrical connector and/or a water connector.

9. The battery storage rack according to claim 1 or 2, **characterized in that** the battery storage rack has adjustable anchor supports.

10. A battery swap station for a new energy vehicle, **characterized in that** a battery storage rack according to any one of claims 1 to 9 is provided in the battery swap station for a new energy vehicle.
